Europäisches Patentamt

(19) European Patent Office

Office européen des brevets

(11) Numéro de publication: **0 018 871**
**B1**

(12) FASCICULE DE BREVET EUROPEEN

(45) Date de publication du fascicule du brevet: **21.04.82**

(51) Int. Cl.³: **G 01 N 27/56**

(21) Numéro de dépôt: **80400487.7**

(22) Date de dépôt: **14.04.80**

(54) Dispositif de mesure du niveau de concentration du monoxyde de carbone dans les gaz dégagés par une combustion, son procédé de fabrication et système de régulation comportant un tel dispositif.

(30) Priorité: **25.04.79 FR 7910532**

(43) Date de publication de la demande:
**12.11.80 Bulletin 80/23**

(45) Mention de la délivrance du brevet:
**21.04.82 Bulletin 82/16**

(84) Etats contractants désignés:
**DE GB IT NL SE**

(56) Documents cités:
**DE - A - 2 718 907**
**DE - A - 2 742 278**
**FR - A - 2 350 598**
**US - A - 3 768 259**
**US - A - 4 040 929**

(73) Titulaire: **THOMSON-CSF**
**173, Boulevard Haussmann**
**F-75360 Paris Cedex 08 (FR)**

(72) Inventeur: **Croset, Michel**
**"THOMSON-CSF" - SCPI 173, Bld Haussmann**
**F-75360 Paris Cedex 08 (FR)**
Inventeur: **Velasco, Gonzalo**
**"THOMSON-CSF" - SCPI 173, Bld Haussmann**
**F-75360 Paris Cedes 08 (FR)**

(74) Mandataire: **Lepercque, Jean et al,**
**"THOMSON-CSF" - SCPI 173, Bld. Haussmann**
**F-75360 Paris Cedex 08 (FR)**

Courier Press, Leamington Spa, England.

Dispositif de mesure du niveau de concentration du monoxyde de carbone dans les gaz dégagés par une combustion, son procédé de fabrication et système de régulation comportant un tel dispositif

La présente invention se rapporte à la mesure du niveau de concentration du monoxyde de carbone dans les gaz dégagés par une combustion, notamment des gaz d'échappement d'un moteur à combustion interne et à son procédé de fabrication.

On connaît des capteurs de composition électrochimique à électrolyte solide, du type pile à concentration. Un tel capteur comprend une première électrode de mesure, un électrolyte solide, et une second électrode en contact avec un milieu de référence. L'électrode de mesure est mise en contact avec le milieu à analyser, par exemple les gaz d'échappement d'un moteur à combustion. Ces gaz comprennent notamment de l'oxygène, du monoxyde de carbone, du gaz carbonique et différents hydrocarbures. Le milieu de référence peut être l'air ambiant ou du moins un réservoir de gaz approprié. Dans d'autres approches, il est utilisé un moyen combinant la fonction électrode et la fonction milieu de référence. On utilise pour ce faire une électrode à base d'une combinaison du type: métal/oxyde de ce métal, voir par exemple FR—A—2350598.

Il se développe aux bornes des électrodes une différence de potentiel donnée par l'expression:

$$Z.F.V_{E1/E2} = \Delta G \qquad (1)$$

avec
$Z$ = nombre de charges mises en jeu pendant la réaction électrochimique
$\Delta G$ = enthalpie libre de la réaction
$F$ = nombre de Faraday = 96490

Dans le cas de l'analyse des gaz d'échappement d'un moteur à combustion interne, les capteurs de l'art ancien, encore appelés sondes $\lambda$, sont essentiellement sensibles à la concentration d'oxygène. Leur courbe de réponse en fonction de la différence de potentiel aux bornes des électrodes présente un basculement brutal à la stoechiométrie du mélange $CO$—$O_2$. L'analyse se fait par prélèvement d'échantillons de gaz qui seuls sont admis à l'intérieur du capteur où ils seront amenés à l'équilibre thermo-dynamique, selon la technique dite de prise d'essai. Pour arriver à ce résultat on dispose habituellement en amont du capteur des moyens qui limitent l'échange gazeux. Le capteur est d'autre part pourvu de moyens catalyseurs qui favorisent la réaction suivante:

$$2\,CO + O_2 = 2\,CO_2 \qquad (2)$$

La différence de potentiel est donnée par la loi de Nernst.

$$V_{E1/E2} = \frac{RT}{4F}\,LN\,\frac{P_1}{P_2} \qquad (3)$$

avec
R: constante de gaz parfaits = 8,314 J (mole. K)
F: nombre de Faraday = 96490
T: température absolue en degrés Kelvin
$P_1$ et $P_2$: pressions partielles, respectivement du milieu de référence et du milieu en contact avec le gaz à analyser.

De tels capteurs sont utilisés couramment pour la régulation des moteurs à combustion, et spécialement pour la régulation de l'admission du mélange air-carburant au niveau du carburateur. Cette régulation est mise en oeuvre en particulier dans les pays imposant des normes anti-pollution sévères. Le moteur fonctionne alors avec un mélange air-carburant à la stoechiométrie.

Dans d'autres pays, tels que certains pays européens, d'autres contraintes, et notamment des mesures d'économie sur la consommation de carburant, imposent un mélange plus pauvre. Les capteurs de l'art connu, ayant une courbe de réponse "tout ou rien", ne sont pas adaptés à ce type de fonctionnement.

Il a été constaté d'autre part, que la courbe de réponse des capteurs de l'art connu pouvait s'infléchir, en particulier lorsque les moyens catalyseurs sont insuffisants. Dans ce cas, la réaction chimique (2) précitée ne se réalise qu'imparfaitement. Ce phénomène a été également constaté après vieillissement de ces capteurs. Les paramètres caractéristiques des courbes de réponses ainsi infléchies ne sont pas reproductibles. Les capteurs présentant ces effets ne peuvent donc pas être utilisés comme capteurs "analogiques" dans la gamme de compositions intéressante, c'est à dire comme capteurs proportionnels.

Enfin, la variation de concentration en monoxyde de carbone dans les gaz d'échappement est en général plus importante que celle de l'oxygène. Il peut donc être intéressant dans certaines conditions de mesurer non pas la concentration en oxygène mais la concentration en monoxyde de carbone.

Pour répondre aux besoins exposés précédemment, l'invention va proposer un dispositif de mesure sensible au monoxyde de carbone et présentant une courbe de réponse permettant un fonctionnement du type proportionnel.

L'invention a donc pour objet un dispositif de mesure de la concentration du monoxyde de carbone dans les résidus de combustion gazeux, ce dispositif étant constitué par une cellule électrochimique comportant une électrode de mesure en contact sur l'une de ses faces avec un électrolyte solide, conducteur ionique de l'oxygène et en communication avec le milieu à analyser sur au moins une partie de ses autres faces, et une électrode de référence en contact sur l'une de ses faces, avec l'électrolyte solide; dispositif de mesure principalement caractérisé en ce qu'au moins une découpe à flancs raides est effectuée dans le matériau constituant l'électrolyte solide et créant des points d'interface triple: électrode — électrolyte solide — gaz de combustion, où se catalyse la réaction:

$$CO + O \rightarrow CO_2;$$

l'atome d'oxygène O provenant exclusivement de la captation d'atomes d'oxygène au sein du réseau du matériau constituant l'électrolyte solide, avec formation de lacunes possédant une charge électrique positive et en ce que le matériau constituant l'électrode de mesure est en métal de texture compacte, freinant la diffusion directe des résidus de combustion gazeux en son sein.

L'invention a également pour objet un procédé de fabrication d'un tel dispositif. Ce procédé est défini par la revendication 8.

L'invention a encore pour objet un système de régulation du mélange air-carburant d'un moteur à combustion comportant ce dispositif aussi qu'un système de régulation du mélange air-carburant pour l'alimentation des brûleurs d'une chaudière. Ces systèmes sont définis par les revendications 9 et 10 respectivement.

L'invention sera mieux comprise et d'autres caractéristiques apparaîtront à la lecture de la description ci-après en se référant aux dessins annexés parmi lesquels:

—la figure 1 est le schéma de principe d'une pile à concentration;

—la figure 2 est un capteur électrochimique du type dit en "doigt de gant";

—la figure 3 est un jeu de courbes de réponse de ce capteur, paramétrées en températures;

—la figure 4 illustre le phénomène physique mis en oeuvre dans l'invention;

—la figure 5 est un jeu de courbes de réponse comparant les réponses, pour une composition donnée, de capteurs de types différents en fonction de la température;

—les figures 6 et 7 sont des structures de base de capteurs utilisables pour la réalisation de dispositifs selon l'invention;

—les figures 8 à 11 représentent des structures d'électrodes de mesure selon l'invention;

—la figure 12 représente en coupe une réalisation de dispositif selon l'invention;

—les figures 13 et 14 sont des courbes de réponse de dispositifs selon l'invention, paramétrées en température;

—la figure 15 illustre l'application de dispositifs de mesure selon l'invention à la mesure du monoxyde de carbone dans les gaz d'échappement d'un moteur à combustion interne;

—la figure 16 illustre l'application d'un dispositif de mesure selon l'invention à la régulation d'un moteur à combustion interne.

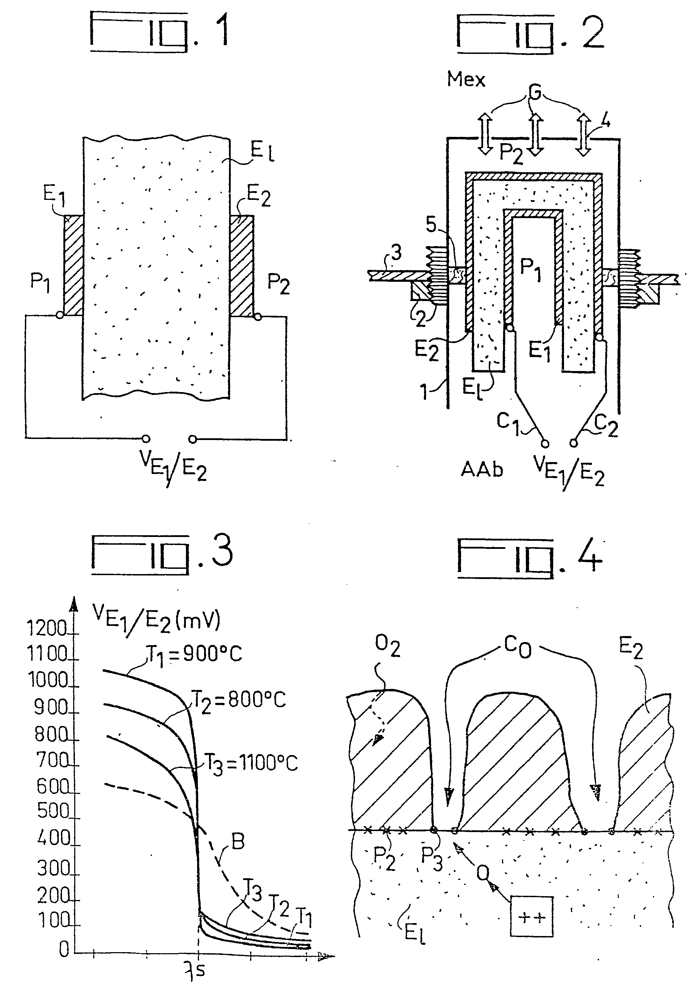

La figure 1 illustre le principe de fonctionnement d'un capteur de pression partielle d'oxygène basé sur le principe de la pile à concentration. La pression partielle d'oxygène $P_1$ du compartiment 1 est connue et sert de référence. Sur les deux électrodes $E_1$, $E_2$ (en platine par exemple) se produisent les réactions:

$$O_2 \leftrightharpoons 2O \quad \xrightleftharpoons[+\,4\,e^-]{-4\,e^-} \quad 2O^{-2}$$

$$(4)$$

A l'équilibre, qui correspond à l'égalisation du potentiel électrochimique de l'oxygène au sein des trois milieux, la valeur de la tension $V_{E1/E2}$ développée aux bornes des électrodes est fournie par la loi de Nernst (3) déjà citée.

De la connaissance de $P_1$ (référence) et de la mesure de $V_{E1/E2}$ et T, est déduite la valeur $P_2$.

Dans ce fonctionnement où le gaz du compartiment 2 est à l'équilibre thermo-dynamique, le rôle de l'électrode se limite à la catalyse de la réaction d'oxydo-réduction:

$$x_n + n.e.^- \leftrightharpoons n\,X^{\alpha -} \qquad (5)$$

Dans le cas présent, l'électrolyte est en général de la zircone, stabilisée à la chaux ou à l'oxyde d'yttrium. De tels capteurs peuvent également être utilisés pour l'analyse de la pression partielle d'un des constituants d'un mélange de gaz hors de l'équilibre thermo-dynamique. Dans ce cas, le capteur mesure la pression partielle qu'aurait l'espèce détectée si le mélange de gaz était parvenu à l'équilibre thermo-dynamique. Au niveau de la mesure, c'est à dire au niveau de l'interface électrode/électrolyte solide, la réaction de combustion doit être complète jusqu'à réaliser l'équilibre thermo-dynamique réversible de la réaction (2):

$$2\,CO + O_2 \leftrightharpoons 2\,CO_2$$

avec

$$\frac{[CO] \times [O^2]^{1/2}}{[C\,O_2]} = K\,(T) \qquad (6)$$

où K est un coefficient d'équilibre dépendant de la température.

Pour ce faire, on munit le capteur électrochimique de moyens catalyseurs. Ces moyens sont le plus souvent confondus avec l'électrode de mesure $E_2$ elle-même. De plus, il est inutile et difficile de porter la totalité du gaz à l'état d'équilibre thermo-dynamique. On n'effectue cet équilibre sur une petite fraction de ce gaz, renouvelé à vitesse souhaitée pour tendre vers une analyse en continu. Les solutions utilisées consistent à limiter l'échange gazeux entre le milieu à analyser et l'électrode choisie pour sa haute activité catalytique.

La figure 2 est un exemple concret de capteur électrochimique réalisé selon les principes qui viennent d'être exposés. Ce capteur comprend une cellule électrochimique en forme de "doigt de gant", composé d'une première électrode $E_1$ en contact avec le milieu de référence $P_1$ qui communique avec l'atmosphère $AA_b$, d'un électrolyte solide $E_l$ et d'une deuxième électrode $E_2$ en contact avec le milieu à analyser $P_2$. La cellule électrochimique $E_2$—$E_l$—$E_1$ est placée dans un boitier 1 ouvert sur le milieu à analyser $M_{ex}$ par des trous calibrés 4 ou des chicanes qui limitent l'échange de gaz G entre le milieu à analyser $M_{ex}$ et l'intérieur du capteur. Le boitier est inséré dans le conduit d'échappement du moteur à combustion 3, par exemple par vissage 2.

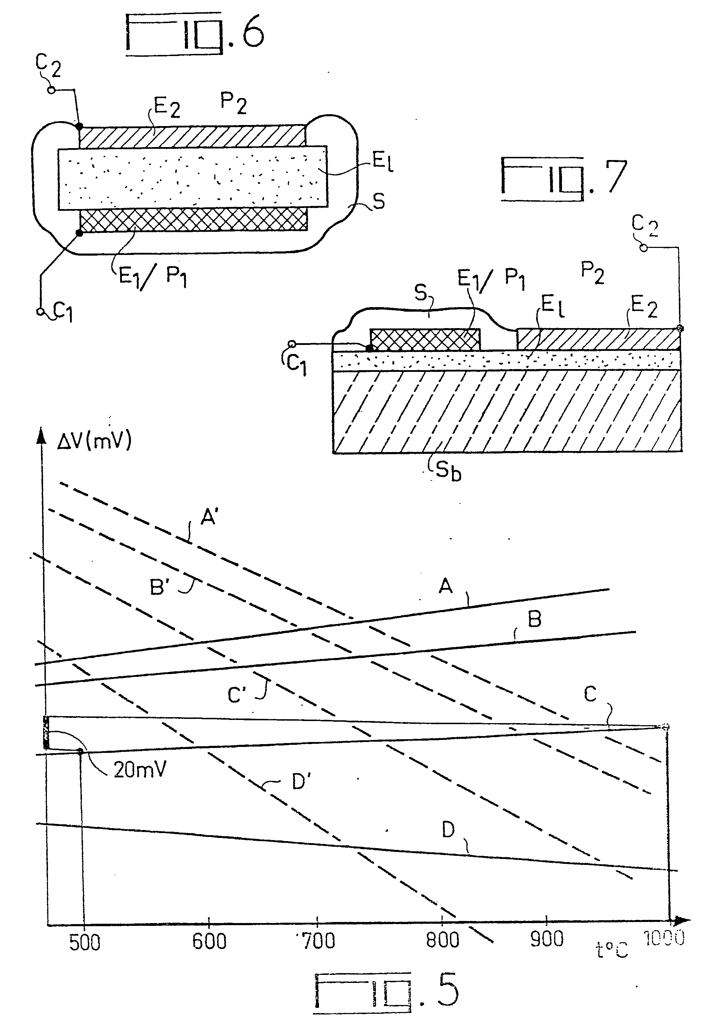

La figure 3 représente un jeu de courbes paramétrées en température (500°C, 800°C, 1100°C) de la différence de potentiel inter-électrodes ($V_{E1/E2}$) en fonction du rapport des concentrations relatives en oxygène et oxyde de carbone. Habituellement on ne peut utiliser que la partie centrale de ces courbes, région dans laquelle elles sont pratiquement confondues, c'est à dire moins dépendantes des variations de température. On détecte le brusque basculement de la courbe dont l'abscisse $\rho_s$ représente la stochiométrie de la réaction définie par:

$$[CO] = \frac{1}{2}[O_2] \qquad (7)$$

Sur la figure 3 on a également tracé une courbe B, en pointillé. Cette courbe représente la réponse, à une température donnée, d'un capteur dont les moyens catalyseurs sont insuffisants, ou encore d'un capteur ayant subi des effets de vieillissement importants. On pourrait penser pouvoir utiliser ce phénomène pour la réalisation de dispositifs de mesure analogiques, c'est à dire proportionnels. Cependant, les paramètres mis en jeu ne sont pas reproductibles, il n'est donc pas possible d'utiliser ce phénomène dans le cadre d'une réalisation industrielle.

Tout au contraire, l'invention va proposer un dispositif de mesure analogique, dont les caractéristiques sont reproductibles. De plus, ce dispositif est sensible au monoxyde de carbone et non plus à l'oxygène. En effet, la composition typique des gaz brulés à la sortie d'un moteur à combustion actuel est:

—oxygène: 0,5% à 2,5%

—monoxyde de carbone + gaz carbonique: typiquement 15%, le pourcentage de monoxyde de carbone seul pouvant être pour sa part: 0.2% à 45% (dans les cas extrêmes; ce dernier chiffre constitue la limite légale en France).

—autres hydrocarbures: inférieurs à 0.4%.

On voit que l'étendue de variation de la concentration en monoxyde de carbone est beaucoup plus importante que celle de l'oxygène.

Lorsqu'on évite la catalyse de la réaction (2) et que les gaz arrivent jusqu'à la région active d'analyse (interface électrode — électrolyte) hors de l'équilibre thermo-dynamique, trois situations peuvent se présenter:

—la cellule de mesure n'est sensible qu'à l'oxygène,

—la cellule de mesure n'est sensible qu'au monoxyde de carbone,

—et le cas intermédiaire: la cellule est sensible aux deux espèces.

Dans le premier cas, comme la concentration en oxygène varie peu, la différence de potentiel aux bornes de la cellule est très faible. L'effet de la température de par les équations (3) et (6) n'étant pas négligeable, la tension parasite induite par cet effet est du même ordre de grandeur que les variations du potentiel utile. La mesure est rendue inexploitable.

Dans le deuxième cas, la cellule n'étant pas sensible qu'au monoxyde de carbone, les conditions suivantes sont réalisées:

—la différence de potentiel interélectrode double par décade de pression

—la variation de concentration est plus importante

—l'effet de la température est réduit.

La variation du potentiel électrochimique associé peut être suffisante pour être exploitable. Dans le cas intermédiaire les réponses peuvent être exploitables dans certaines conditions, en particulier si l'effet de l'oxygène peut être considéré comme constant. La réponse de la cellule est alors liée au monoxyde de carbone et ce case se rapproche du cas précédent.

Un dispositif de mesure selon l'invention doit donc être capable de fournir un signal électrique sensible à la concentration en monoxyde de carbone dans le mélange à analyser, pas ou très peu sensible à la concentration d'oxygène, et être peu sensible aux effets de la température. Ces propriétés permettent une relation biunivoque entre la teneur en monoxyde de carbone et la différence de potentiel électrochimique mesurée, dans une gamme de température étendue (500 à 800°C) pour une concentration en oxyde de carbone variant de 0.1% à 1.5% environ.

Pour s'affranchir d'une trop grande dépendance vis-à-vis des variations de température du mélange fluide à analyser, il a été proposé dans l'art connu une structure de capteur dans laquelle une des électrodes servait également de milieu de référence. Cette structure peut être réalisée de préférence par la technique des dépôts en couches minces. L'élec-trode est réalisée sous forme d'un composé du type: "métal-oxyde de ce métal". Dans ce cas, on a les relations:

$$x M + \frac{1}{2} O_2 \rightleftharpoons M_x O \qquad (8)$$

et

$$\frac{[M] \times [O_2]^{1/2}}{[M_x O]} = K'(T) \qquad (9)$$

où M est le métal utilisé. En ayant en mémoire la relation exprimant K (T):(6), il suffit de trouver une valeur K' (T), tel que K (T) — K' (T) ≠ constante, pour que l'on ait une compensation en température dans une large gamme de concentration.

La figure 5 représente un double jeu de courbes expérimentales: variation $\Delta V$ (en millivolts) de la réponse d'un capteur en fonction de la température, ce avec en paramètre le rapport des concentrations

$$\frac{CO}{CO_2}.$$

Les courbes A, B, C et D sont celles d'un capteur muni d'une électrode du type métal — oxyde de métal, c'est à dire faisant fonction de milieu de référence; et les courbes A', B', C' et D', celles d'un capteur du type de celui représenté sur la figure 2; avec pour:

A et A': $\dfrac{CO}{CO_2} = 1$

B et B': $\dfrac{CO}{CO_2} = 0,5$

C et C': $\dfrac{CO}{CO_2} = 0,1$

D et D': $\dfrac{CO}{CO_2} = 0,01$

On réalise immédiatement qu'un capteur du type à électrodes de référence est beaucoup moins dépendant de la température qu'un capteur du type de la figure 2, les essais ayant été effectués dans les mêmes conditions.

Pour l'analyse d'un gaz comprenant du monoxyde de carbone, de l'oxygène et du gaz carbonique, on peut utiliser les associations suivantes pour la construction de l'électrode $E_1/P_1$: Ni/NiO, Pb/PbO, Ag/AgO, Pd/PdO ou Cr/Cr$_2$O$_3$, sans que cette énumération soit exhaustive. Ces dispositions permettant une plus grande indépendance par rapport à la température seront retenues pour la réalisation d'un dispositif de mesure selon l'invention.

L'invention concerne plus spécialement l'électrode de mesure $E_2$. Elle ne doit pas favoriser la réaction (2) précitée. Cependant, il est impossible de trouver un métal, nécessaire à la réalisation de l'électrode de mesure, parfaitement non catalytique. De plus, l'électrolyte n'est perméable qu'à l'ion oxygène. L'invention propose une électrode dont la structure géométrique est telle qu'elle favorise la création de ce qui va être appelé dans ce qui suit: "point triple". Ce "point triple" est l'interface gaz —

électrode — électrolyte. Ces "points triples" sont illustrés sur la figure 4 et portent la référence $P_3$ par opposition au "point double" $P_2$ interface électrode — électrolyte, utilisé dans l'art connu. Au niveau de ces points triples $P_3$, se réalise la réaction suivante:

$$CO + O_{(zircone)} \rightarrow CO_2 \qquad (10)$$

L'oxygène n'est pas l'oxygène contenue dans le gaz à analyser, mais uniquement l'oxygène captée dans le réseau de l'électrolyte, ce avec création de lacunes chargées positivement ( $\boxed{++}$ sur la figure 4).

Les figures 6 et 7 représentent deux structures de base utilisables pour la réalisation de dispositifs selon l'invention.

Sur la figure 6, une électrode de mesure $E_2$ et une électrode de référence $E_1/P_1$ sont déposées en couches minces de part et d'autre d'un électrolyte solide $E_1$ massif, qui assure également la rigidité mécanique de l'ensemble. A l'exception de la face supérieure de l'électrode de mesure $E_2$, l'ensemble du dispositif est protégé sur toutes ses faces par un corps isolant, étanche et inerte S qui peut être de l'émail ou de l'alumine. L'électrode de mesure est en contact avec le milieu à analyser $P_2$. La différence de potentiel interélectrode est recueillie à l'aide des contacts électriques $C_1$ et $C_2$.

La figure 7 représente une variante préférée de structure de dispositif de mesure utilisable par l'invention. Les électrodes $E_1/P_1$ et $E_2$ sont déposées sur un électrolyte en couche mince $E_1$ et sont coplanaires. L'ensemble est solidaire d'un substrat massif $S_b$ qui assure la rigidité mécanique du dispositif.

Dans ces deux cas les connexions $C_1/C_2$ peuvent être réalisées en utilisant une laque de platine, prolongeant les électrodes vers l'extérieur de la cellule, et assurant ainsi les connexions de sortie du dispositif.

Des valeurs typiques sont:
—épaisseur de l'électrode de référence: 0,02 à 0,5 microns
—épaisseur de l'électrolyte: 1 Å à 500 microns.

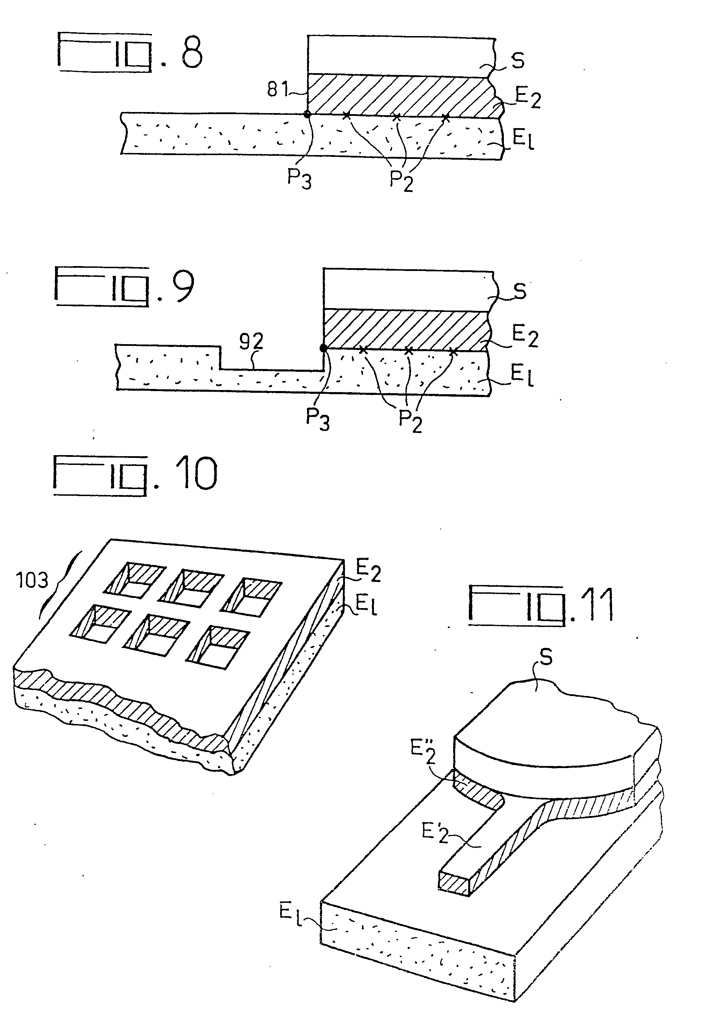

La réalisation d'une électrode de mesure, conforme à l'invention va maintenant être décrite avec plus de précision en relation avec les figures 8 à 11.

L'expérimentation met en évidence que la réaction (10) qui se réalise aux points triples $P_3$ est particulièrement favorisée par rapport à la réaction utilisée dans l'art connu (2), qui se réalise aux points doubles $P_2$, si le renouvellement du gaz à analyser n'est pas limité. Ceci peut être réalisé par une structure géométrique ouverte assurant une transition brutale entre le "milieu électrolyte solide" et le "milieu électrode de mesure". Cet aspect est illustré sur la figure 8. Le flanc 81 de l'électrode est représenté comme étant perpendiculaire à la surface de l'électrolyte.

Le phénomène est encore accentué si l'électrolyte est creusé en 92 comme illustré sur la figure 9.

L'électrode ne devant être active qu'au voisinage immédiat des points triples $P_3$, plusieurs dispositions peuvent être adoptées et en particulier:

—le matériau de l'électrode doit être dense pour s'opposer à la diffusion en son sein du gaz à analyser vers l'interface électrode — électrolyte solide de façon à minimiser la réaction (2). On utilise pour ce faire un métal de texture compacte.

—l'électrode peut être recouverte d'une couche inerte étanche S, par exemple de l'émail, de façon à s'opposer également à la pénétration des gaz comme illustré sur les figures 8 et 9. Cette couche peut encore être remplacée par une couche d'un autre métal, par exemple du titane ou du chrome.

Pour diminuer le temps de réponse de la cellule de mesure, il y a lieu d'augmenter le nombre de points triples $P_3$ par rapport au nombre de points doubles $P_2$. Cet aspect n'est pas lié à la qualité de la réponse, qui dépend essentiellement de ce qui a été décrit précédemment. Pour ce faire on peut, d'une part, augmenter le nombre de "cellules élémentaires", constituées par les cellules des figures 8 ou 9, et, d'autre part, diminuer la distance inter-cellules ou les dimensions de la partie active de l'électrode de mesure.

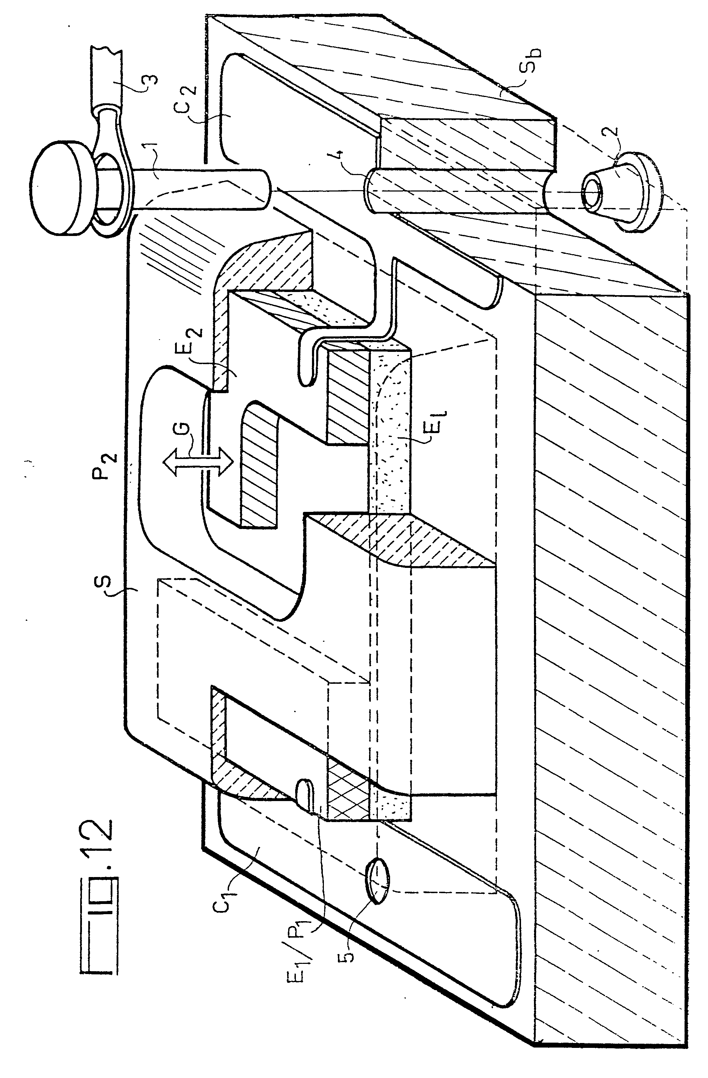

Ces conditions peuvent être réalisées en adoptant une structure géométrique de type grille 103 à maille très fines, comme illustré sur la figure 10. Dans une autre variante, le courant traversant la cellule n'étant pas important, la partie active de l'électrode active peut aussi se réduire à une seule languette très fine comme illustrée sur la figure 11. La longueur de la languette peut être de l'ordre de 10 $\mu$m. On peut également réaliser une électrode de mesure comportant plusieurs languettes pour obtenir une structure en forme de peigne. Seule la zone $E'_2$ est active, la zone $E''_2$ peut être recouverte d'une couche inerte étanche S. Cette zone $E''_2$ sert à établir le contact électrique.

Le procédé de fabrication des électrodes de mesure selon l'invention va maintenant être décrit de façon plus détaillée. La disposition la plus importante à assurer est une découpe franche de la partie active de l'électrode de mesure. Pour ce faire, on utilise l'usinage ionique.

Les étapes du procédé de fabrication sont les suivantes:

1. Dépôt des électrodes par le procédé connu de pulvérisation cathodique diode sur l'électrolyte solide. La distance anode — cathode est de l'ordre de 40 mm et la tension cathodique d'environ 3000 V. Le dépôt de métal (par exemple du platine) doit atteindre une épaisseur comprise entre 2000 et 5000 Å. La pulvérisation s'effectue en atmosphère d'argon, sous une pression de 1 à 10 Pa.

2. Création d'un masque définissant les zones de la couche métallique constituant l'électrode à conserver et les zones à éliminer. Les techniques habituelles de masquage utilisées pour la fabrication des circuits semiconducteurs intégrés peuvent être mises en oeuvre, et notamment l'utilisation d'une couche de résine photosensible, d'une couche métallique diélectrique ou d'une couche métallique. Dans le premier cas la couche de résine devra être éliminée ultérieurement, dans les autres cas la couche pourra être laissée telle quelle pour constituer la couche des figures 8, 9 et 11.

3. Découpe par un procédé directif des zones à éliminer, à travers le masque, pour assurer une découpe franche et par là même une transition brutale entre le "milieu électrolyte solide" et le "milieu électrode de mesure". On peut utiliser le procédé de découpe par érosion ionique.

Les autres organes constituant la cellule de mesure sont réalisées par les techniques bien connues de l'homme de métier. Cette réalisation sort du cadre de l'invention et ne sera pas décrite plus avant.

La structure d'un dispositif selon l'invention est illustrée de façon plus complète sur la figure 12. Des coupes partielles ont été effectuées pour rendre plus apparente la disposition des différents composants internes du dispositif. Le substrat $S_b$ peut également servir à la fixation de l'ensemble du dispositif dans un boitier (non représenté). Des orifices 4, 5 ont été pratiqués à cet effet, au travers du substrat $S_b$ à ses deux extrémités, au niveau des plages métalliques des contacts de sortie $C_1$ — $C_2$. Les fixations 1, 2 peuvent également servir de prise de contact électrique vers une liaison électrique 3 transmettant les signaux de sortie du dispositif de mesure vers l'extérieur. Pour le clarté de la figure, une seule fixation a été représentée sur la figure 12. Une ouverture découvrant toute la partie active de l'électrode $E_2$ a été pratiquée dans l'isolant S. L'électrode de mesure $E_2$ est réalisée sous forme de languette (figure 11).

La figure 13 donne la réponse théorique en différence de potentiel interélectrode $V_{E1/E2}$ (en mV) d'un dispositif selon l'invention, en fonction du pourcentage de monoxyde de carbone, X%, compris dans le gaz à analyser. On suppose que le gaz à analyser ne contient pas d'oxygène. Cette réponse présente une zone $Z_1$ exploitable pour la mesure. Dans cette zone les différentes courbes de réponse paramétrées en température sont pratiquement confondues. Au delà de cette zone, la réponse devient très dépendante de la température. Par exemple, pour une même tension $V_y$ correspondent deux points d'abscisses $X_1$ et $X_2$, (pour deux températures $T_1$ et $T_2$) très éloignés l'un de l'autre.

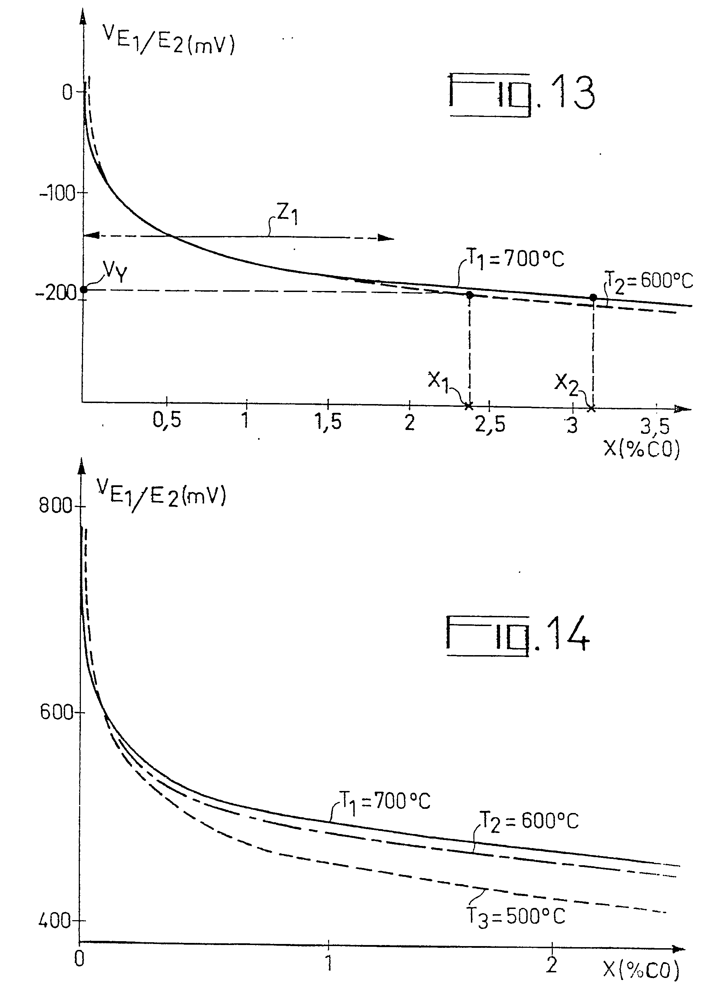

Des mesures sur un dispositif expérimental réalisé selon les principes de l'invention ont été effectuées en particulier dans la zone $Z_1$. Les résultats de ces mesures sont portés sur la figure 14 (différence de potentiel interélectrode $V_{E1/E2}$ en fonction du pourcentage, X%, de monoxyde de carbone), ce pour trois températures différentes ($T_1 = 700°C$, $T_2 = 600°C$, $T_3 = 500°C$). Ces mesures diffèrent quelque peu de la courbe théorique de la figure 12. Ceci est dû d'une part que la catalyse directe n'est pas entièrement éliminée et, d'autre part, que l'effet de température est plus important que prévu. Des moyens supplémentaires de compensation en température peuvent être prévus, par exemple un thermo-couple extérieur à la cellule. Cependant, ces moyens, bien connus de l'homme de métier sortent du cadre de l'invention et ne seront pas décrits plus avant. Enfin le décalage en valeur absolue sur l'échelle des tensions est dû à la présence de 1% d'oxygène environ.

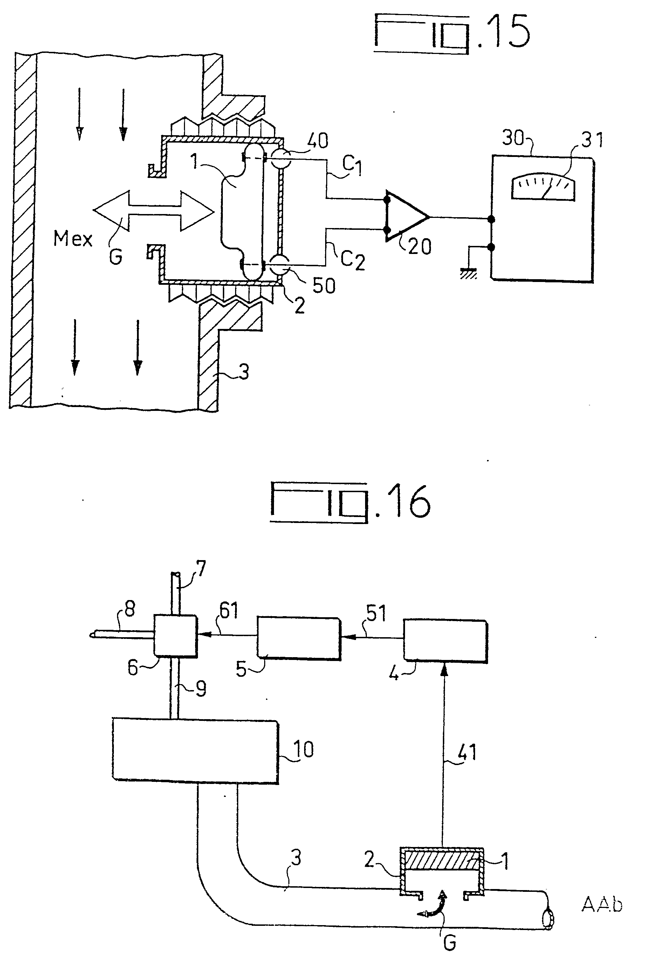

La figure 15 illustre l'analyse du monoxyde de carbone contenu dans les gaz d'échappement d'un moteur à combustion interne. Le dispositif de mesure 1 selon l'invention, placé dans un boitier 2, est inséré dans le conduit d'échappement 3 d'un moteur à combustion interne. Des connexions $C_1$ et $C_2$ traversant les isolants 40 et 50, transmettent les signaux de sortie du dispositif à un amplificateur opérationnel 20. Cet amplificateur doit posséder une impédance d'entrée élevée pour ne pas perturber la mesure. Dans une variante préférée, l'étage d'entrée est constitué par un transistor à effet de champ, du type "MOS". La tension de sortie de cet amplificateur sera transmise à un appareil de mesure 30. Les moyens de visualisation 31 de cet appareil de mesure peuvent être de tout type approprié, numérique ou analogique, ou encore être constitués par des segments colorés sur une échelle.

Le dispositif de mesure peut être inséré, comme indiqué sur la figure 16, dans une boucle de régulation de l'admission du mélange air-carburant d'un moteur à combustion interne 10. Le moteur 10 comporte des conduits d'admission d'air 7 et de carburant 8, qui sont mélangés dans un organe 6. Cet organe peut être un carburateur, un dispositif d'injection ou tout autre dispositif analogue. Le mélange est amené au moteur 10 par le conduit 9. L'organe 6 est sous le contrôle d'un régulateur 5. La liaison 61 est par exemple un axe d'accouplement mécanique. Les gaz brûlés sont ensuite éjectés dans l'atmosphère $AA_b$ par un circuit d'échappement 3. Sur le trajet est disposé un dispositif de mesure 1, dans son boitier 2, qui communique avec le gaz d'échappement par l'orifice G. Le signal électrique développé entre les électrodes $E_2 — E_1$ de la cellule électrochimique de mesure est transmis à un dispositif de commande par les liaisons électriques 41. Le dispositif de commande, comme on vient de le voir, doit posséder une forte impédance d'entrée. Ce dispositif est du type proportionnel. On peut le doter de circuits électroniques linéarisant la courbe de réponse du dispositif de mesure 1. Sa sortie commande le régulateur 5 par la liaison 51. Contrairement à l'art connu, mettant en oeuvre des capteurs fonctionnant en "tout ou rien", à la stochiométrie, le dispositif de l'invention permet de faire fonctionner le moteur avec un mélange pauvre.

Cette méthode n'est pas limitée à la régulation du mélange air-carburant d'un moteur à combustion. Sans rien changer à la structure du schéma de la figure 16, le moteur 10 peut être remplacé, à titre d'exemple non limitatif, par les brûleurs d'une chaudière. Le dispositif de mesure 1 est alors inséré dans le circuit 3 d'évacuation des gaz brûlés.

Enfin, comme il est bien connu, les différents constituants du dispositif de mesure pourront être choisis parmi une large gamme de matériaux, et par exemple non limitatif:

—l'électrode $E_1/P_1$ peut être constituée par l'une des associations suivantes: Ni/NiO, Pb/PbO, Ag/AgO, Pd/PdO ou $Cr/Cr_2O_3$;

—l'électrode $E_2/P_2$ peut être en platine de densité comprise entre 20,8 et 21,4 $g/cm^3$ ou en or de densité comprise entre 18,6 et 19,3 $g/cm^3$ ou en alliage de ces métaux, entre eux ou avec de l'argent;

—l'électrolyte $E_l$ peut être en zircone, thorine ou oxyde de cerium, stabilisé par un ou plusieurs éléments des colonnes $II_A$ et $III_B$ du tableau périodique, sous forme céramique ou de couche mince sur un substrat approprié;

—le matériau isolant peut être constitué par des émaux diélectriques du type habituellement utilisés par les fabricants de circuits hybrides ou d'autres couches diélectriques et inertes déposées par les techniques des couches minces ou épaisses (dans le sens habituellement retenu en microélectronique).

—le substrat, dans le cas où l'électrolyte solide est réalisé par la technique des couches minces, peut être constitué par un bon isolant électrique, inerte vis à vis de toutes les réactions électrochimiques intervenant dans le fonctionnement du dispositif de mesure, avec une bonne tenue mécanique et une bonne adaptation thermique. Le meilleur exemple connu est l'alumine, sous forme de céramique de haute qualité, ou de préférence de l'alumine monocristalline, du type corindon ou saphir. L'utilisation de substrats métalliques, présentant une bonne adaptation thermique (par exemple Ni Cr) peut également être envisagée. Ces substrats présentent l'avantage de combiner les fonctions "support mécanique" et "sortie des contacts électriques". On peut en outre les utiliser comme électrode de référence.

D'autres matériaux peuvent être retenus comme le quartz, certains oxydes de métaux sous forme de céramique ou mono-cristalline ou encore certains nitrures, comme le nitrure de silicium.

Enfin, les structures de base des cellules de mesure, décrites en relation avec les figures 6 et 7 n'ont été données qu'à titre illustratif, d'autres structures sont utilisables dans le cadre de l'invention permettant la réalisation d'électrodes de mesures du type de celle décrites sur les figures 8 à 11.

## Revendications

1. Dispositif de mesure de la concentration du monoxyde de carbone dans les résidus de combustion gazeux (G), le dispositif étant constitué par une cellule électrochimique comportant une électrode de mesure $(E_2)$ en contact sur l'une de ses faces avec un électrolyte solide $(E_1)$, conducteur ionique de l'oxygène et en communication avec le milieu à analyser $(P_2)$ sur au moins une partie de ses autres faces, et une électrode de référence $(E_1/P_1)$ en contact sur l'une de ses faces avec l'électrolyte solide; dispositif caractérisé en ce que au moins une découpe à flancs raides (81) est effectuée dans le matériau constituant l'électrode de mesure $(E_2)$, découvrant l'électrolyte solide $(E_1)$ et créant des points d'interface triple $(P_3)$: électrode $(E_2)$ — électrolyte solide $(E_1)$ — gaz de combustion (G), où se catalyse la réaction: $CO + O \rightarrow CO_2$; l'atome d'oxygène O provenant exclusivement de la captation d'atomes d'oxygène au sein du réseau du matériau constituant l'électrolyte solide $(E_1)$, avec formation de lacunes possédant une charge électrique positive; et en ce que le matériau constituant l'électrode de mesure $(E_2)$ est en métal de texture compacte, freinant la diffusion directe des résidus de combustion gazeux (G) en son sein.

2. Dispositif selon la revendication 1, caractérisé en ce que la découpe (92) est effectuée selon une direction sensiblement normale aux plans formés par l'électrolyte solide $(E_1)$ et la couche de matériau déposé constituant l'électrode de mesure $(E_2)$, et se prolonge selon cette direction dans l'épaisseur de l'électrolyte solide $(E_1)$.

3. Dispositif selon l'une quelconque des revendications 1 ou 2, caractérisé en ce que l'électrode de mesure $(E_2)$ est en outre recouverte d'une couche de matériau inerte (S).

4. Dispositif selon l'une quelconque des revendications 1 ou 2 caractérisé en ce que l'électrode de mesure $(E_2)$ est en outre recouverte d'une couche de métal; le métal étant du titane ou du chrome.

5. Dispositif selon l'une quelconque des revendications 1 à 4, caractérisé en ce que plusieurs découpes sont effectuées dans l'électrode de mesure $(E_2)$; les découpes étant régulièrement réparties de manière à ce que l'électrode de mesure se présente sous la forme d'une grille (103).

6. Dispositif selon l'une quelconque des revendications 1 à 5, caractérisé en ce que le matériau constituant l'électrode de mesure $(E_2)$ est choisi parmi les métaux suivants: platine de densité comprise entre 20.8 et 21.4 g/cm³ ou or de densité comprise entre 18.6 et 19.3 g/cm³.

7. Dispositif selon l'une quelconque des revendications 1 à 5, caractérisé en ce que l'électrode de référence est constitué par un système métal — oxyde de ce métal; le métal étant choisi parmi les suivants: nickel, argent, plomb, paladium, ou chrome.

8. Procédé de fabrication d'un dispositif selon l'une quelconque des revendications 1 à 7, caractérisé en ce que pour la phase de réalisation de l'électrode de mesure $(E_2)$, il est procédé au moins aux étapes suivantes:
—dépôt d'une couche de métal, sur une épaisseur comprise dans la gamme 2000 à 5000 Å, par pulvérisation cathodique sur l'électrolyte solide $(E_1)$;
—masquage de la couche de métal par une couche de matériau protecteur de zones prédéterminées de la surface du métal constituant l'électrode de mesure $(E_2)$;
—et découpe par érosion ionique des zones non protégées.

9. Système de régulation du mélange air-carburant d'un moteur à combustion comportant un dispositif à boucle de rétroaction pour la commande d'un régulateur d'admission air-carburant, caractérisé en ce qu'il comporte dans la boucle de rétroaction un dispositif selon l'une quelconque des revendications 1 à 7 analysant les résidus de combustion gazeux (G).

10. Système de régulation du mélange air-carburant pour l'alimentation des brûleurs d'une chaudière comportant un dispositif de commande à boucle de rétroaction pour la commande d'un régulateur d'admission air carburant, caractérisé en ce qu'il comporte un dispositif selon l'une quelconque des revendications 1 à 7 analysant les résidus de combustion gazeux (G).

## Claims

1. Device for measuring the carbon monoxide concentration in gaseous combustion residuals (G), the device being formed by an electrochemical cell comprising a measurement electrode $(E_2)$, in contact with a solid electrolyte $(E_1)$ on one of its faces, the solid electrolyte being oxygen ion conductive and in communication with the medium $(P_2)$ to be analyzed on at least a portion of its other faces, and a reference electrode $(E_1/P_1)$ contacting the solid electrolyte on one of its faces; the device being characterized in that at least one cut having steep flanks (81) is made into the material forming the measurement electrode $(E_2)$ in a manner to uncover the solid electrolyte $(E_1)$ and to create points $(P_3)$ of threefold interface: electrode $(E_2)$ — solid electrolyte $(E_1)$ — combustion gas (G), where the reaction: $CO + O \rightarrow CO_2$ performs in the presence of a catalyst; the oxygen atom O exclusively originating from oxygen atom capture within the grid of the material forming the solid electrolyte $(E_1)$, including the forming of holes having positive electric charge; and in that the material forming the measurement electrode (E₂) is of a metal having compact texture inhibiting the direct diffusion of the gaseous combustion residuals (G) therewithin.

2. Device in accordance with claim 1, characterized in that the cut (92) is made in a direction substantially normal to the plane formed by the solid electrolyte (E₁) and the deposited material layer forming the measurement electrode (E₂), and is extended in this direction into the thickness of the solid electrolyte (E₁).

3. Device in accordance with any of claims 1 or 2, characterized in that the measurement electrode (E₂) is further covered by a layer of inert material (S).

4. Device in accordance with any of claims 1 or 2, characterized in that the measurement electrode (E₂) is further covered by a metal layer, the metal being titanium or chromium.

5. Device in accordance with any of claims 1 to 4, characterized in that a plurality of cuts are made into the measurement electrode (E₂); the cuts being regularly distributed in such a manner that the measurement electrode has the form of a grid (103).

6. Device in accordance with any of claims 1 to 5, characterized in that the material forming the measurement electrode (E₂) is selected among the following metals: platinum having a density comprised between 20.8 and 21.4 g/cm³ or gold having a density comprised between 18.6 and 19.3 g/cm³.

7. Device in accordance with any of claims 1 to 5, characterized in that the reference electrode is formed by a system of a metal and an oxide of this metal; the metal being selected among the following: nickel, silver, lead, palladium or chromium.

8. Method of producing a device in accordance with any of claims 1 to 7, characterized in that at least the following steps are performed for the stage of producing the measurement electrode (E₂):

—depositing a metal layer by cathode sputtering on the solid electrolyte (E₁) to a thickness within the range of 2000 to 5000 Å;

—masking the metal layer by a layer of a material protecting predetermined zones of the metal surface forming the measurement electrode (E₂);

—cutting away the unprotected zones by ionic erosion.

9. System for regulating the air-fuel mixture of a combustion engine comprising a device having a feedback loop for controlling an air-fuel supply regulator, characterized in that it comprises a device in accordance with any of claims 1 to 7 in its feedback loop for analyzing the gaseous combustion residuals (G).

10. System for regulating the air-fuel mixture supplying the burners of a furnace, comprising a control device having a feedback loop for controlling an air-fuel supply regulator, characterized in that it comprises a device in accordance with any of claims 1 to 7 analyzing the gaseous combustion residuals (G).

**Patentansprüche**

1. Vorrichtung zum Messen der Kohlenmonoxidkonzentration in gasförmigen Verbrennungsprodukten (G), wobei die Vorrichtung gebildet ist aus einer elektrochemischen Zelle mit einer Meßelektrode (E₂), die auf einer ihrer Seiten mit einem Feststoffelektrolyt (E₁) in Berührung ist, der sauerstoffionenleitend ist und mit dem zu analysierenden Milieu (P₂) auf wenigstens einem Teil seiner anderen Flächen in Berührung ist, und einer Bezugselektrode (E₁/P₁), die auf einer ihrer Seiten mit einem Feststoffelektrolyt in Berührung ist; wobei die Vorrichtung dadurch gekennzeichnet ist, daß wenigstens eine steilflankiger Ausschnitt (81) in dem die Meßelektrode (E₂) bildenden Material angebracht ist, welcher den Feststoffelektrolyt (E₁) freilegt und Punkte (P₃) einer dreifachen Grenzfläche erzeugt: Elektrode (E₂) — Feststoffelektrolyt (E₁) — Verbrennungsgas (G), wo die Reaktion: $CO + O \rightarrow CO_2$ unter Katalysatoreinfluß abläuft; wobei das Sauerstoffatom O ausschließlich herrührt aus dem Einfangen von Sauerstoffatomen im Inneren des den Feststoffelektrolyt (E₁) bildenden Stoffgitters, unter Bildung von Löchern, die eine positive elektrische Ladung aufweisen; und daß der die Meßelektrode (E₂) bildende Stoff ein Metall mit kompaktem Gefüge ist, welches die direkte Ausbreitung der gasförmigen Verbrennungsprodukte (G) in seinem Inneren hemmt.

2. Vorrichtung nach Anspruch 1, dadurch gekennzeichnet, daß der Ausschnitt (92) entlang einer im wesentlichen senkrechten Richtung zu den Ebenen, die von dem Feststoffelektrolyt (E₁) und von der die Meßelektrode (E₂) bildenden aufgebrachten Materialschicht gebildet sind, ausgeführt ist und in dieser Richtung in die Dicke des Feststoffelektrolyts (E₁) hinein verlängert ist.

3. Vorrichtung nach Anspruch 1 oder 2, dadurch gekennzeichnet, daß die Meßelektrode (E₂) ferner von einer Schicht aus einem inerten Material (S) bedeckt ist.

4. Vorrichtung nach Anspruch 1 oder 2, dadurch gekennzeichnet, daß die Meßelektrode (E₂) ferner von einer Metallschicht bedeckt ist; wobei das Metall Titan oder Chrom ist.

5. Vorrichtung nach einem der Ansprüche 1 bis 4, dadurch gekennzeichnet, daß mehrere Ausschnitte in der Meßelektrode (E₂) angebracht sind; wobei die Ausschnitte regelmäßig so verteilt sind, daß die Meßelektrode die Form eines Gitters (103) hat.

6. Vorrichtung nach einem der Ansprüche 1 bis 5, dadurch gekennzeichnet, daß das Material, aus dem die Meßelektrode (E₂) gebildet ist, unter den folgenden Metallen ausgewählt ist; Platin mit einer Dichte zwischen 20,8 und 21,4 g/cm³ oder Gold mit einer Dichte zwischen 18,6 und 19,3 g/cm³.

7. Vorrichtung nach einem der Ansprüche 1 bis 5, dadurch gekennzeichnet, daß die Bezugselektrode gebildet ist aus einem System aus einem Metall und einem Oxid dieses Metalls; wobei das Metall aus folgenden Elementen ausgewählt ist: Nickel, Silber, Blei, Palladium oder Chrom.

8. Verfahren zur Herstellung einer Vorrichtung nach einem der Ansprüche 1 bis 7, dadurch gekennzeichnet, daß für die Phase der Herstellung der Meßelektrode ($E_2$) wenigstens die folgenden Schritte durchgeführt werden:

—Ablagern einer Metallschicht mit einer Dicke von 2000 bis 5000 Å durch Katodenzerstäubung auf dem Feststoffelektrolyt ($E_1$);

—Abdecken der Metallschicht durch eine Schicht aus einem Material, das vorbestimmte Zonen der Oberfläche des Metalls schützt, welche die Meßelektrode ($E_2$) bilden;

—und Herausschneiden der ungeschützten Zonen durch Ionenerosion.

9. System zur Regulierung des Luft-Brennstoff-Gemisches eines Verbrennungsmotors mit einer eine Rückkopplungsschleife enthaltenden Vorrichtung zur Steuerung eines Ansaugluft-Brennstoff-Reglers, dadurch gekennzeichnet, daß es in der Rückkopplungsschleife eine Vorrichtung nach einem der Ansprüche 1 bis 7 enthält, welche die gasförmigen Verbrennungsprodukte (G) analysiert.

10. System zum Regulieren des Luft-Brennstoff-Gemisches zur Speisung von Brennern eines Heizkessels, mit einer eine Rückkopplungsschleife enthaltenden Steuervorrichtung zum Steuern eines Luftzufuhr-Brennstoff-Reglers, dadurch gekennzeichnet, daß es eine Vorrichtung nach einem der Ansprüche 1 bis 7 enthält, welche die gasförmigen Verbrennungsprodukte (G) analysiert.

Fig.1

Fig.2

Fig.3

Fig.4

Fig.6

Fig.7

Fig.5

FIG. 8

81

S

E_2

E_l

P_3    P_2

FIG. 9

92

S

E_2

E_l

P_3    P_2

FIG. 10

103

E_2

E_l

FIG. 11

S

E''_2

E'_2

E_l

Fig.12

Fig.13

Fig.14

FIG.15

FIG.16